# EUROPÄISCHE PATENTANMELDUNG

(11) **EP 1 619 238 A1**
(43) Veröffentlichungstag der Anmeldung: **25.01.2006**
(21) Anmeldenummer: 04017226.4
(22) Anmeldetag: 21.07.2004
(51) Int. Cl.: C12G 3/04, C12H 1/00, C12C 12/00

(54) **Verfahen zum Herstellen eines Biergetränks**

(71) Anmelder: Huber, Günther, 6380 St. Johann in Tirol (AT); Englmann, Josef, Dipl.-Ing., 85414 Kirchdorf (DE)
(72) Erfinder: Huber, Günther, 6380 St. Johann in Tirol (AT); Englmann, Josef, Dipl.-Ing., 85414 Kirchdorf (DE)
(74) Vertreter: Grünecker, Kinkeldey, Stockmair & Schwanhäusser Anwaltssozietät

(57) **Zusammenfassung**

Es werden Verfahren zum Herstellen eines Biergetränks, zum Herstellen und Abfüllen eines Biergetränks und zum Herstellen und Haltbarmachen eines Biergetränks beschrieben, die zu einem neuen, geschmacklich interessanten, haltbaren und auch in Weißglasflaschen abfüllbaren Biergetränk führen. Zu diesem Zweck wird ein obergäriges und ein untergäriges Bier gemischt.

## Beschreibung

Die Erfindung bezieht sich auf ein Verfahren zum Herstellen eines Biergetränks.

Die gegenwärtig auf dem Markt befindlichen Biersorten lassen sich grob in zwei Gruppen, die obergärigen Biersorten und die untergärigen Biersorten unterteilen, die sich primär durch die Art der verwendeten Hefe und dem daraus resultierenden Gärverfahren unterscheiden. Die Obergärung ist die ursprüngliche Art der Bierherstellung und wird mit Hefen durchgeführt, die von der Gärungskohlensäure nach oben getragen werden, so dass sie sich im Bereich der Decke des Gärungsbehälters anreichert und dort geerntet werden können. Obergärig hergestellte Biere sind in Deutschland beispielsweise als Weizenbier, Weißbier, Altbier, Kölsch oder dgl. auf dem Markt. In Großbritannien werden diese Biere als Ale, Porter oder Stout und beispielsweise in Belgien als Lambic, Gueuze, Trappisten- oder Witbier gebraut und verkauft. Untergärige Biersorten haben sich erst später, insbesondere mit der Erfindung von Kältemaschinen und einer verbesserten Filtriermöglichkeit entwickelt und sind unter den unterschiedlichsten Bezeichnungen auf dem Markt, in Deutschland beispielsweise als LagerbierNollbier, Export, Bier nach Pilsner Typ, Märzen und dgl.

Jede dieser Biersorten ist jedoch, wie jedes natürliche Lebensmittel, nicht unbegrenzt haltbar. Insbesondere sorgen Umwelteinflüsse, wie beispielsweise Sauerstoff, Licht und Wärme dafür, dass der Geschmack mit zunehmender Lagerzeit leidet; und zwar auch dann, wenn das Bier in gut verschlossenen Flaschen aus dunklem, grünem oder braunem, Glas abgefüllt wird. An diese dunklen Glasflaschen hat sich der Verbraucher zwar gewöhnt, sie sind jedoch nicht besonders attraktiv, insbesondere vermitteln sie für den Verbraucher nicht den Eindruck eines frischen Biers, den ein in einem durchsichtigen Trinkglas serviertes, frisch gezapftes Bier bietet. Bei einer Abfüllung in Weißglasflaschen (ohne Lichtschutz) würden sich jedoch selbst bei kühler Lagerung bereits nach ca. vier Wochen geschmackliche Veränderungen bemerkbar machen.

Der gegenwärtige Kundengeschmack tendiert zunehmend in Richtung auf ein schlankes Bier mit einer harmonischen Bittere.

Der Erfindung liegt die Aufgabe zugrunde, ein Verfahren zum Herstellen eines neuen Biergetränks zu schaffen.

Die Aufgabe wird durch jedes der in den Ansprüchen 1 bis 3 beschriebenen Verfahren gelöst.

Durch die erfindungsgemäße Mischung von obergärigem und untergärigem Bier wird ein neues Biergetränk geschaffen, das, je nach Mischungsgrad, eine schlankere, frischere Geschmacksnote aufweist. Eine für den Fachmann ungewöhnliche und überraschende Eigenschaft der Mischung von obergärigem oder untergärigem Bier liegt jedoch in der signifikant erhöhten Haltbarkeit, insbesondere der Geschmacksstabilität. Diese Eigenschaft gestattet es, das erfindungsgemäß Biergetränk selbst in Weißglasflaschen abgefüllt zum Verkauf anzubieten, wobei das erfindungsgemäße Biergetränk aus Weißglasflaschen (ohne Lichtschutz) länger geschmacksstabil bleibt als jede der zur Mischung verwendeten Einzel-Biersorten, insbesondere dann, wenn diese ebenfalls in Weißglasflaschen abgefüllt sind.

Das Mischungsverhältnis zwischen ober- und untergärigem Bier hängt von dem Geschmack und der Art der verwendeten Einzel-Biersorten und dem gewünschten Geschmack des Biergetränks ab, wobei jedoch der Anteil an obergärigem Bier zur Erhöhung der Geschmacksstabilität nicht unter etwa 10 Vol.%, insbesondere nicht unter etwa 20 Vol.% fallen sollte. Ein Anteil von 25 Vol.% bis 50 Vol.% stellt im Hinblick auf die Verbesserung der Geschmacksstabilität und im Hinblick auf einen am Kundengeschmack orientierten, schlanken Bier einen guten Kompromiss dar.

Bevorzugt wird als obergäriges Bier Weizenbier und als untergäriges Bier ein Export- bzw. LagerbierNollbier verwendet.

Sowohl das obergärige Bier als auch das untergärige Bier sollten filtriert sein.

Eine besonders bevorzugte Mischung besteht aus 25 Vol.% obergäriges, unfiltriertes, hell eingebrautes Weizenbier (Hefeweizen) und 75 Vol.% untergäriges, hell eingebrautes Bier.

Nachfolgend werden Ausführungsbeispiele der Erfindung näher beschrieben.

Das erfindungsgemäße Biergetränk wird hergestellt, indem obergäriges und untergäriges Bier gemischt wird.

Als obergäriges Bier kann jede gängige und handelsübliche, obergärige Biersorte, hell oder dunkel, wie beispielsweise Weizenbier, Weißbier, Altbier, Kölsch, Ale usw., verwendet werden. Das obergärige Bier kann ungefiltert oder gefiltert verwendet werden. Ein bevorzugtes obergäriges Bier ist hell eingebrautes, ungefiltertes Weizenbier (Hefeweizen). Gute Ergebnisse wurden jedoch auch mit gefiltertem Weizenbier (Kristallweizen) erzielt.

Zur Herstellung des erfindungsgemäßen Biergetränks kann weiterhin jede untergärige Biersorte, hell oder dunkel, wie beispielsweise Lagerbier/Vollbier, Export, Biere nach Pilsner Typ, Märzen usw. verwendet werden. Die Biere sind gefiltert.

Obergäriges und untergäriges Bier können in jedem Mischungsverhältnis zueinander gemischt werden. Bevorzugt ist der Anteil an obergärigem Bier geringer als der Anteil an untergärigem Bier, das obergärige Bier kann jedoch auch in der Mischung überwiegen, wenn dies beispielsweise aus geschmacklichen Gründen oder dgl. gewünscht ist. Weitere Substanzen werden dem bevorzugten, erfindungsgemäßen Biergetränk nicht zugesetzt. Die Biersorte mit dem kleineren Anteil, was meist das obergärige Bier sein wird, liegt in einer Menge von etwa 10 Vol.% und mehr vor, während der Rest untergäriges Bier ist. Im Hinblick auf eine verbesserte Haltbarkeit, insbesondere eine verbesserte Geschmacksstabilität, haben sich Anteile von etwa 20 Vol.% an obergärigem Bier und mehr bewährt. Ein guter Kompromiss zwischen einem angenehmen, schlanken Geschmack und einer verbesserten Geschmacksstabilität ergeben Anteile von etwa 25 bis etwa 30 Vol.% an obergärigem Bier.

Zur Herstellung des erfindungsgemäßen Biergetränks werden obergäriges und untergäriges Bier, fertig gebraut und bevorzugt gefiltert, in den gewünschten Mischungsverhältnissen gemischt.

Das erfindungsgemäße Biergetränk kann als Fassbier in den Handel kommen, kann jedoch auch, wegen seiner hervorragenden Haltbarkeit, in Flaschen und insbesondere in Flaschen aus Weißglas abgefüllt werden. Die zum Abfüllen des erfindungsgemäßen Biergetränks verwendeten Weißglasflaschen können aus einem Weißglas in der gewünschten Form und der gewünschten Festigkeit hergestellt werden, wie es beispielsweise auch bisher zum Abfüllen von Säften oder dgl. verwendet wurde. Die Weißglasflasche zum Abfüllen des erfindungsgemäßen Biergetränks erfordert keinerlei Einfärbung und/oder Beschichtung mit absorbierenden Eigenschaften für Licht bzw. Lichtbestandteile. Trotzdem ist das erfindungsgemäße Biergetränk in Weißglasflaschen ohne Lichtschutz zumindest ebenso gut und lange lagerfähig, wie es die zur Mischung verwendeten Biersorten einzeln abgefüllt in dunklen Flaschen sind. Neben der Geschmacksstabilität ist auch die mikrobiologische Haltbarkeit über die gesamte Lagerdauer gegeben.

### Beispiele

Es wurden zwei erfindungsgemäß hergestellte Biergetränke mit den Untersuchungsbezeichnungen KK "Gold" und KK "Weiss" untersucht.

KK "Gold" wurde aus 50 % Kristallweizen und 50 % filtriertem, untergärigem, hellem Bier gemischt. Die Laborwerte sind der Tabelle 1 zu entnehmen. Die Werte wurden durch herkömmliche, jedem Fachmann auf dem Gebiet des Brauwesens bekannte Messverfahren und insbesondere durch die standardisierten Verfahren nach MEBAK (Mitteleuropäische Analysekommission) bestimmt. Die sensorischen Prüfungen wurden durch beschreibende bzw. bewertende Prüfungen, insbesondere eine beschreibende Verkostung, ebenfalls nach MEBAK gewonnen.

Mit den gleichen Mess- und Prüfverfahren wurden die Laborwerte für das erfindungsgemäße Biergetränk KK"Weiss" gemäß Tabelle 2 gewonnen. KK "Weiß" wurde aus 45 % gefiltertem Weizenbier (Kristallweizen) und 55 % filtriertem, untergärigem, hellem Leichtbier gemischt.

### BIERUNTERSUCHUNG

### Bezeichnung: KK "Gold"

### Probenehmer: Auftraggeber

**TABELLE 1**

| | | | | |
|---|---|---|---|---|
| Stammwürze | | Gew.% | 10,54 | MEBAK II 2.10.6.2 |
| | | Gew./Vol.% | 10,96 | |
| Alkohol | | Gew.% | 3,63 | |
| | | Vol.% | 4,62 | |
| Extrakt | scheinbar | Gew.% | 1,79 | |
| | | Gew./Vol.% | 1,80 | |
| Spez.Gewicht bei 20°C | | | 1,00697 | |
| Extrakt | wirklich | Gew.% | 3,45 | |
| | | Gew./Vol.% | 3,48 | |
| Ausstoß-V° | scheinbar | % | 84 | |
| | wirklich | % | 68 | |
| End-V° | scheinbar | % | 84 | MEBAK II 2.9.1 |
| | wirklich | % | 68 | |
| pH-Wert | | | 4,50 | MEBAK II 2.14 |
| Farbe | | EBC | 5,30 | MEBAK II 2.13.1 |
| Aussehen | | | klar | |
| EBC-Bittereinheiten | | EBC | 15,2 | MEBAK II 2.18.1 |
| Schaum | n. Nibem | s | 289 | MEBAK 112.19.2 |
| Forciertest | 0/40°C | WTg. | 34 | MEBAK II 2.15.2.1 |

### BIERUNTERSUCHUNG

### Bezeichnung: KK "Weiss"

### Probenehmer: Auftraggeber

**TABELLE 2**

| | | | | |
|---|---|---|---|---|
| Stammwürze | | Gew.% | 9,57 | MEBAK II 2.10.6.2 |
| | | Gew./Vol.% | 9,92 | |
| Alkohol | | Gew.% | 3,28 | |
| | | Vol.% | 4,17 | |
| Extrakt | scheinbar | Gew.% | 1,61 | |
| | | Gew./Vol.% | 1,62 | |
| Spez.Gewicht bei 20°C | | | 1,00628 | |
| Extrakt | wirklich | Gew.% | 3,12 | |
| | | Gew.Nol.% | 3,14 | |
| Ausstoß-V° | scheinbar | % | 84 | |
| | wirklich | % | 68 | |
| End-V° | scheinbar | % | 84 | MEBAK II 2.9.1 |
| | wirklich | % | 68 | |
| pH-Wert | | | 4,53 | MEBAK II 2.14 |
| Farbe | | EBC | 5,00 | MEBAK II 2.13.1 |
| Aussehen | | | klar | |
| EBC-Bittereinheiten | | EBC | 10,5 | MEBAK II 2.18.1 |
| Schaum | n. Nibem | s | 272 | MEBAK II 2.19.2 |
| Forciertest | 0/40°C | WTg. | 32 | MEBAK II 2.15.2.1 |

**TABELLE 3 Verkostungsergebnisse KK"Gold"**

| | Verkostung frisches Bier (14.11.2003) | Verkostung gealtertes Bier (14.04.2004) Aufbewahrungstemperatur: 8 bis 10°C | Verkostung gealtertes Bier (14.04.2004) Aufbewahrungstemperatur: Zimmertemperatur |
|---|---|---|---|
| Farbe: | typgerecht | typgerecht | typgerecht |
| Schaum: | gut | gut | gut |
| Geruch: | rein | noch rein Spur gealtert | leicht gealtert |
| Geschmack: | rein | noch rein Spur gealtert | leicht gealtert |
| Bittere: | harmonisch fast nicht wahrnehmbar | harmonisch fast nicht wahrnehmbar | harmonisch fast nicht wahrnehmbar |

**TABELLE 4 Verkostungsergebnisse KK"Weiss"**

| | Verkostung frisches Bier (14.11.2003) | Verkostung gealtertes Bier (14.04.2004) Aufbewahrungstemperatur: 8 bis 10°C | Verkostung gealtertes Bier (14.04.2004) Aufbewahrungstemperatur: Zimmertemperatur |
|---|---|---|---|
| Farbe: | typgerecht | typgerecht | typgerecht |
| Schaum: | gut | gut | gut |
| Geruch: | rein | noch rein Spur gealtert | leicht gealtert |
| Geschmack: | rein etwas schlanker als KK"Gold" | noch rein Spur gealtert etwas schlanker als KK"Gold" | leicht gealtert etwas schlanker als KK"Gold" |
| Bittere: | harmonisch fast nicht wahrnehmbar | harmonisch fast nicht wahrnehmbar | harmonisch fast nicht wahrnehmbar |

Die in Weißglasflaschen ohne Lichtschutz abgefüllten Biergetränke KK "Gold" und KK "Weiss" wurden zunächst nach Abfüllung und nach fünfmonatiger Lagerzeit einer beschreibenden Verkostung nach MEBAK unterworfen. Ein Teil der gelagerten Biergetränke wurde bei etwa 8 bis 10°C aufbewahrt. Ein zweiter Teil der Biergetränke bei Zimmertemperatur.

Die Ergebnisse sind den Tabellen 3 und 4 zu entnehmen. Aus den Verkostungsergebnissen ergibt sich, dass selbst bei Einlagerung der Biergetränke bei Zimmertemperatur, nach fünf Monaten nur leichte Alterungserscheinungen in den Biergetränken, selbst bei Lagerung in Weißglasflaschen ohne Lichtschutz, festzustellen sind. Dies bedeutet, dass die abgefüllten Biergetränke eine ungewöhnlich hohe Geschmacksstabilität aufweisen.

Es wurde eine weitere Verkostung durchgeführt, durch die der Einfluss unterschiedlicher Mischungsverhältnisse im erfindungsgemäßen Biergetränk auf den Geschmack festgestellt werden sollte. Die Ergebnisse sind wie folgt:
- 90 % untergäriges, helles Bier/10 % Hefeweizen:
   Farbe typgerecht, Schaum visuell gut. Das Bier war rein, eine Spur angenehm fruchtig in Geruch und Geschmack, ansprechend vollmundig, rezent, insgesamt vom Export dominiert.
- 75 % untergäriges, helles Bier/25 % Hefeweizen:
   Das Bier war in der Farbe typgerecht, der Schaum war visuell gut. Das Bier war rein in Geruch und Geschmack, vollmundig, mild im Trunk, rezent, insgesamt sehr harmonisch abgestimmt.
- 50 % untergäriges, helles Bier/50 % Hefeweizen: Das Bier zeigte sich in der Farbe typgerecht, der Schaum war visuell gut. Es war rein in Geruch und Geschmack, sehr vollmundig, rezent, insgesamt aber zu stark vom Hefeweizen dominiert.

Bei der Verkostung wurde festgestellt, dass ein Anteil an obergärigem Bier, insbesondere an Weizenbier, von etwa 25 bis 50 Vol.% für die geschmackliche Qualität optimal zu sein scheint, da dem untergärigen, hellen Bier etwas die Bittere genommen wird, und die "Harmonie" des Bieres zunimmt.

## Patentansprüche

1. Verfahren zum Herstellen eines Biergetränks, wobei obergäriges und untergäriges Bier gemischt wird.

2. Verfahren zum Herstellen und Haltbarmachen eines Biergetränks, wobei einem untergärigen Bier ein Anteil obergäriges Bier zugemischt wird.

3. Verfahren zum Herstellen und Abfüllen eines Biergetränks in Flaschen, wobei obergäriges und untergäriges Bier gemischt und in Weißglasflaschen abgefüllt wird.

4. Verfahren nach einem der Ansprüche 1 bis 3, **dadurch gekennzeichnet, dass** der Anteil an obergärigem Bier 10 Vol.% bis 90 Vol.% , insbesondere 10 Vol.% bis 80 Vol.%, insbesondere 10 Vol.% bis 50 Vol.%, insbesondere 20 Vol.% bis 50 Vol.%, insbesondere 25 Vol.% bis 30 Vol.% beträgt.

5. Verfahren nach einem der Ansprüche 1 bis 4, **dadurch gekennzeichnet, dass** als obergäriges Bier Weizenbier verwendet wird.

6. Verfahren nach einem der Ansprüche 1 bis 5, **dadurch gekennzeichnet, dass** als untergäriges Bier ein helles Bier verwendet wird.

7. Verfahren nach einem der Ansprüche 1 bis 6, **dadurch gekennzeichnet, dass** filtrierte Biere verwendet werden.

8. Verfahren nach einem der Ansprüche 1 bis 7, **dadurch gekennzeichnet, dass** 25 Vol.% obergäriges, filtriertes, hell eingebrautes Weizenbier und 75 Vol.% untergäriges, hell eingebrautes Export gemischt wird.

9. Biergetränk aus einer Mischung aus einem obergärigen und einem untergärigen Bier.

10. Verkaufseinheit mit einer Weißglasflasche und einem darin enthaltenen Biergetränk aus einer Mischung aus einem obergärigen und einem untergärigen Bier.
